(19) **Europäisches Patentamt / European Patent Office / Office européen des brevets**

(11) **EP 4 174 986 A1**

(12) **EUROPEAN PATENT APPLICATION**
published in accordance with Art. 153(4) EPC

(43) Date of publication:
03.05.2023 Bulletin 2023/18

(21) Application number: 21867173.3

(22) Date of filing: 10.09.2021

(51) International Patent Classification (IPC):
$H01M\ 4/36$ (2006.01)   $H01M\ 4/587$ (2010.01)
$H01M\ 4/62$ (2006.01)   $H01M\ 4/133$ (2010.01)
$H01M\ 10/0525$ (2010.01)   $H01M\ 4/02$ (2006.01)

(52) Cooperative Patent Classification (CPC):
H01M 4/02; H01M 4/133; H01M 4/36; H01M 4/587;
H01M 4/62; H01M 10/0525; Y02E 60/10

(86) International application number:
PCT/KR2021/012366

(87) International publication number:
WO 2022/055308 (17.03.2022 Gazette 2022/11)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 11.09.2020 KR 20200117152

(71) Applicant: LG Energy Solution, Ltd.
Seoul 07335 (KR)

(72) Inventors:
• PIAO, Lilin
  Daejeon 34122 (KR)
• LEE, Yong Ju
  Daejeon 34122 (KR)
• WOO, Sang Wook
  Daejeon 34122 (KR)

(74) Representative: Hoffmann Eitle
Patent- und Rechtsanwälte PartmbB
Arabellastraße 30
81925 München (DE)

(54) **NEGATIVE ELECTRODE MATERIAL, AND NEGATIVE ELECTRODE AND SECONDARY BATTERY COMPRISING SAME**

(57) The present invention relates to a negative electrode material including natural graphite particles having a BET specific surface area ranging from 1.0 $m^2$/g to 2.4 $m^2$/g, and artificial graphite particles having a BET specific surface area ranging from 0.5 $m^2$/g to 2.0 $m^2$/g, wherein an average particle diameter ($D_{50}$) of the natural graphite particles is larger than an average particle diameter ($D_{50}$) of the artificial graphite particles.

EP 4 174 986 A1

**Description**

## TECHNICAL FIELD

### Cross-reference to Related Applications

This application claims the benefit of Korean Patent Application No. 10-2020-0117152, filed on September 11, 2020, in the Korean Intellectual Property Office, the disclosure of which is incorporated herein in its entirety by reference.

### Technical Field

The present invention relates to a negative electrode material, and a negative electrode and a secondary battery including the same.

## BACKGROUND ART

As there is an increase in the price of energy sources due to fossil fuel depletion and there is an increasing interest on environmental pollution, eco-friendly alternative energy source is becoming essential for the future life.

In particular, demand for secondary batteries as an eco-friendly alternative energy source has been significantly increased as technology development and demand with respect to mobile devices have increased.

Although a conventional lithium metal is used as a negative electrode, the secondary batteries have a problem of battery short due to dendrite formation and the risk of explosion caused thereby, and thus the use of a carbon-based active material capable of reversible intercalation and deintercalation of lithium ions and maintaining structural and electrical properties is being on the rise.

Various types of carbon-based materials such as artificial graphite, natural graphite, hard carbon, have been applied as the carbon-based active material, and among these, a graphite-based active material capable of ensuring the lifetime characteristics of a lithium secondary battery with excellent reversibility is most widely used. Since the graphite-based active material has a low discharge voltage of -0.2 V compared to lithium, the battery using the graphite-based active material can exhibit a high discharge voltage of 3.6 V, thereby providing a lot of advantages in terms of energy density of a lithium battery.

Among these, the natural graphite exhibits a high output and capacity compared to other carbon-based active materials such as artificial graphite, and has excellent adhesion, thereby reducing the usage of a binder, etc., and realizing a high capacity and high-density negative electrode. However, the natural graphite has a problem in that cycle swelling due to an electrolyte side reaction is deteriorated as charging and discharging continue compared to the artificial graphite, and thus there is concern about limiting the use despite the advantages described above.

Accordingly, it is necessary to develop a negative electrode active material capable of exhibiting high output and capacity that natural graphite has, and preventing the cycle swelling.

Japanese Patent Publication No. 4403327 discloses graphite powder for a lithium ion secondary battery negative electrode, but does not suggest an alternative to the problem described above.

[PRIOR ART DOCUMENT]

[PATENT DOCUMENT]

Japanese Patent Publication No. 4403327

## DISCLOSURE OF THE INVENTION

### TECHNICAL PROBLEM

An aspect of the present invention provides a negative electrode material characterized by including, at a particular weight ratio, natural graphite particles and artificial graphite particles having a particular specific surface area, and by having an average particle diameter of natural graphite particles larger than an average particle diameter of artificial graphite particles, the negative electrode material being capable of effectively preventing cycle swelling due to an electrolyte side reaction and exhibiting excellent output and capacity characteristics that natural graphite has.

Another aspect of the present invention provides a negative electrode and a secondary battery including the above-described negative electrode material.

**TECHNICAL SOLUTION**

According to an aspect of the present invention, there is provided a negative electrode material including natural graphite particles having a BET specific surface area ranging from 1.0 m$^2$/g to 2.4 m$^2$/g, and artificial graphite particles having a BET specific surface area ranging from 0.5 m$^2$/g to 2.0 m$^2$/g, wherein an average particle diameter ($D_{50}$) of the natural graphite particles is larger than an average particle diameter ($D_{50}$) of the artificial graphite particles.

According to another aspect of the present invention, there is provided a negative electrode including a negative electrode current collector, and a negative electrode active material layer formed on the negative electrode current collector, wherein the negative electrode active material layer comprises the above-described negative electrode material.

According to another aspect of the present invention, there is provided a secondary battery including the above-described negative electrode, a positive electrode facing the negative electrode, a separator interposed between the positive electrode and the negative electrode, and an electrolyte.

**ADVANTAGEOUS EFFECTS**

A negative electrode material according to the present invention is characterized by including natural graphite particles and artificial graphite particles having a particular specific surface area, and by having an average particle diameter of natural graphite particles larger than an average particle diameter of artificial graphite particles. The negative electrode material is capable of exhibiting excellent capacity and energy density of natural graphite as well as preventing cycle swelling at an excellent level by using natural graphite particles and artificial graphite particles in which the BET specific surface area is adjusted.

**MODE FOR CARRYING OUT THE INVENTION**

Terms or words used in the specification and claims should not be interpreted as being limited to a conventional or dictionary meaning, and should be interpreted as the meaning and concept that accord with the technical spirit, based on the principle that an inventor can appropriately define the concept of a term in order to explain the invention in the best way.

The terms used herein are for the purpose of describing exemplary embodiments only and are not intended to limit the present invention. As used herein, the singular forms, "a", "an" and "the" are intended to include the plural forms as well unless the context clearly indicates otherwise.

It will be understood that the terms "include", "comprise", or "have" when used in the specification, specify the presence of stated features, numbers, steps, elements, or combinations thereof, but do not preclude the presence or addition of one or more other features, numbers, steps, elements, or combinations thereof.

The expression "$D_{50}$" in the specification may be defined as a particle diameter corresponding to 50% of each cumulative volume in a particle size distribution curve of particles. The $D_{50}$, for example, may be measured by using a laser diffraction method. The laser diffraction method is capable of measuring a particle diameter from a submicron range to a range of several millimeters, thereby obtaining results of high reproducibility and high resolution.

The BET specific surface area in the specification, for example, may be measured by the Brunauer-Emmett-Teller (BET) method using BELSORP (BET equipment, BEL JAPAN Co.) by using an absorbate gas such as nitrogen.

Hereinafter, the present invention will be described in detail.

**<Negative Electrode Material>**

The present invention relates to a negative electrode material, particularly to a negative electrode material for a secondary battery, and more particularly to a negative electrode material for a lithium secondary battery.

Specifically, the negative electrode material of the present invention includes natural graphite particles having a BET specific surface area of 1.0 m$^2$/g to 2.4 m$^2$/g, and artificial graphite particles having a BET specific surface area of 0.5 m$^2$/g to 2.0 m$^2$/g, wherein an average particle diameter ($D_{50}$) of the natural graphite particles is larger than an average particle diameter ($D_{50}$) of the artificial graphite particles.

A negative electrode material according to the present invention is characterized by including natural graphite particles and artificial graphite particles having a particular specific surface area, and by having an average particle diameter of natural graphite particles larger than an average particle diameter of artificial graphite particles. The negative electrode material is capable of exhibiting excellent capacity and energy density of natural graphite as well as preventing cycle swelling at an excellent level by using natural graphite particles and artificial graphite particles in which the BET specific surface area is adjusted.

The negative electrode material includes natural graphite particles.

The natural graphite particles may include a natural graphite core and a carbon coating layer formed on the natural graphite core.

The carbon coating layer may contribute to the improvement in the structural stability of the natural graphite particles. In addition, the carbon coating layer can reduce fine pores present in the natural graphite core and reduce the BET specific surface area to a desired level, thereby effectively preventing side reactions with an electrolyte.

The carbon coating layer may be contained in an amount of 1 wt% to 7 wt% in the natural graphite particles, preferably, 2 wt% to 6 wt% so as to prevent the inhibition of lithium intercalation/deintercalation due to excessive formation while sufficiently improving the side reactions with the electrolyte, and the structural stability.

The carbon coating layer may include amorphous carbon. The carbon coating layer, for example, may be formed by providing the natural graphite particles with at least one carbon coating layer precursor selected from the group consisting of pitch, rayon, and a polyacrylonitrile-based resin, and then heat-treating the same. The heat-treatment process for forming the carbon coating layer may be performed in a temperature range of 1,000 °C to 1,500 °C so as to promote the uniform formation of the carbon coating layer.

The BET specific surface area of the natural graphite particles is 1.0 $m^2$/g to 2.4 $m^2$/g. In general, the natural graphite has a large specific surface area because of pores present on the surface of and inside the natural graphite, and thus there is a problem in that cycle swelling due to the electrolyte side reaction is deteriorated. However, for the negative electrode material of the present invention, the natural graphite particles in which the BET specific surface area is adjusted to the above-described level are used, and thus the side reaction with the electrolyte can be prevented, thereby improving the lifetime characteristics of the negative electrode material, and desirably realizing high output characteristics that the natural graphite has.

If the range of the BET specific surface area of the natural graphite particles is greater than 2.4 $m^2$/g, there is a problem in that the electrolyte side reactions are deteriorated and irreversible reactions of the negative electrode material increase to reduce efficiency, and thus output, and capacity characteristics that the natural graphite has cannot be sufficiently realized. In addition, if the range of the BET specific surface area of the natural graphite particles is less than 1.0 $m^2$/g, it is not preferable that there is concern over increasing interface resistance and degrading output characteristics because of excessively low specific surface area.

Preferably, the BET specific surface area of the natural graphite particles may be in a range of 1.5 $m^2$/g to 2.2 $m^2$/g, more preferably, may be in a range of 1.7 $m^2$/g to 2.1 $m^2$/g, and when the BET specific surface area is in the above range, the swelling is prevented without inhibiting output characteristics of the natural graphite, and thus there are advantages in terms of the improvement in lifetime performance and high-temperature storage performance.

The BET specific surface area of the natural graphite particles may be realized by appropriately adjusting an average particle diameter ($D_{50}$) of the natural graphite particles, the performance and conditions of a cold isostatic press (CIP) method, and heat-treatment conditions of the carbon coating layer, etc.

The natural graphite particles may have an average particle diameter ($D_{50}$) of 14 um to 21 um, preferably, 16 um to 19 um. If the average particle diameter (D50) of the natural graphite particles is adjusted to the above-described range, this is preferable in terms of the prevention of swelling because the BET specific surface area is adjusted to a desirable level and pores between particles are reduced, and also preferable because the problems, in which the excessive increase in the average particle diameter of the natural graphite particles makes further volume expansion by charging and discharging, and the longer diffusion distance of lithium, the more reduced rapid charging performance, are prevented.

The sphericity of the natural graphite particles may be 0.7 to 1, preferably 0.8 to 1, and more preferably 0.9 to 1. When the sphericity is in the above range, packing between particles is smooth so that the output characteristics may be improved, and stress applied to the particles by the rolling process is alleviated during the manufacture of the negative electrode so that the prevention effect of the swelling may be desirably realized.

The sphericity of the natural graphite particles may be measured by a known sphericity measurement method, specifically, a sphericity measurement method via Morphologi 4 instrument manufactured by Malvern, Ltd.

The negative electrode material includes artificial graphite particles.

The artificial graphite particles may be primary particles, secondary particles, or a mixture of primary particles and secondary particles, preferably may be in a form of primary particles so as to realize a desired BET specific surface area and a desired range of the average particle diameter. In the present specification, the secondary particles may mean an aggregate of at least two primary particles, and the primary particles may mean a form of single particles in which the primary particles do not aggregate.

If the artificial graphite particles are the primary particles, the artificial graphite particles may be formed of artificial graphite, specifically, may not include an amorphous carbon coating layer, etc., and specifically, the whole surface of the artificial graphite in the artificial graphite particles may be exposed to the outside. If the artificial graphite particles are the primary particles and do not include the amorphous carbon coating layer, it is preferable in achieving the specific surface range in the above-described range, and the negative electrode including the artificial graphite particles is capable of realizing the prevention effect of the electrolyte side reactions at an excellent level.

If the artificial graphite particles are the secondary particles, the secondary particles may be an aggregate of the primary particles, and specifically, the primary particles may not be aggregated by van der Waals forces, but by a resin binder such as pitch to form the secondary particles. If the artificial graphite particles are the secondary artificial graphite particles formed by aggregating at least two primary artificial graphite particles, the secondary artificial graphite particles may be formed by adding primary artificial graphite particles into a reactor and then operating this, that is, spinning the primary artificial graphite particles may make the primary artificial graphite particles aggregate due to the centrifugal force, thereby forming the secondary artificial graphite particles. In the process of aggregating the primary artificial graphite particles, pitch, etc. and the resin binder are added to the reactor together with the primary artificial graphite particles, and artificial graphite particles may be manufactured in a secondary particle form.

In some cases, the artificial graphite particles may further include a carbon coating layer formed on the surface thereof. The carbon coating layer may contribute to the improvement in the structural stability of the artificial graphite particles. In addition, the carbon coating layer can reduce fine pores present in the artificial graphite core and reduce the BET specific surface area to a desired level, thereby effectively preventing side reactions with an electrolyte.

The carbon coating layer may be contained in an amount of 1 wt% to 7 wt%, preferably 2 wt% to 6 wt% in the artificial graphite particles, so as to prevent the inhibition of lithium intercalation/deintercalation due to excessive formation while sufficiently improving the side reactions with the electrolyte, and the structural stability.

The BET specific surface area of the artificial graphite particles is 0.5 $m^2$/g to 2.0 $m^2$/g. The artificial graphite particles according to the present invention has the BET specific surface area thereof adjusted to the above-described level, and are thus capable of improving the lifespan characteristics of the negative electrode material by preventing the side reactions with the electrolyte when used together with the natural graphite particles, and when the above range is satisfied, the internal voids of the artificial graphite particles are reduced and the degree of expansion during charging is reduced, thereby being advantageous for long-term cycle characteristics.

If the range of the BET specific surface area of the artificial graphite particles is greater than 2.0 $m^2$/g, there is a problem in that the electrolyte side reactions are deteriorated and irreversible reactions of the negative electrode material increase to reduce efficiency, and there is concern in that it is difficult to achieve a desired prevention of the swelling and cycle characteristics are degraded. If the BET specific surface area range of the artificial graphite particles is less than 0.5 $m^2$/g, there is a problem in that the specific surface area of the artificial graphite particles is excessively reduced to thus increase interface resistance and be disadvantageous for lithium intercalation and deintercalation.

The BET specific surface area of the artificial graphite particles may be preferably, 0.8-1.8 $m^2$/g, more preferably 0.80-1.25 $m^2$/g, and still more preferably 1.00-1.25 $m^2$/g, and when the BET specific surface area is in the above range, the effects of electrolyte side reaction prevention, efficiency improvement, and cycle characteristics improvement may be further improved, and the increase in the interface resistance and the disadvantage of the lithium intercalation and deintercalation due to the excessive reduction of the specific surface area may be prevented.

The BET specific surface area of the artificial graphite particles may be realized by appropriately adjusting selecting, pulverizing, and shaping conditions of artificial graphite raw materials, graphitization temperature conditions, etc.

The artificial graphite particles may have an average particle diameter ($D_{50}$) of 6 um to 13 um, preferably 7 um to 12 $\mu$m, and more preferably 8 um to 9 um. If the average particle diameter ($D_{50}$) of the artificial graphite particles is adjusted to the above-described range, it is preferable because the artificial graphite particles can be appropriately disposed in a space formed between the natural graphite particles, and it is preferable because when the artificial graphite particles are used together with the natural graphite particles, the packing between particles is desirably achieved, thereby improving the energy density of the negative electrode.

The sphericity of the artificial graphite particles may be 0.6 to 1, preferably 0.65 to 1, and more preferably 0.7 to 1. When the sphericity is in the above range, the packing between particles is smooth so that the output characteristics may be improved, and stress applied to the particles by the rolling process is alleviated during the manufacture of the negative electrode so that the prevention effect of the swelling may be desirably realized.

The sphericity of the artificial graphite particles may be measured by a known sphericity measurement method, specifically, a sphericity measurement method via Morphologi 4 instrument manufactured by Malvern, Ltd.

The average particle diameter ($D_{50}$) of the natural graphite particles is larger than the average particle diameter ($D_{50}$) of the artificial graphite particles, and thus the artificial graphite particles can be appropriately disposed in a space formed between the natural graphite particles, thereby being preferable for the packing between particles and the improvement in the energy density.

If the average particle diameter ($D_{50}$) of the natural graphite particles is equal to or less than the average particle diameter ($D_{50}$) of the artificial graphite particles, there is concern over excessively increasing the specific surface area of the natural graphite particles, thereby being disadvantageous for long-term cycle characteristics, and the expansion degree of the natural graphite particles may excessively increase during lithium intercalation and deintercalation.

Specifically, the ratio of the average diameter ($D_{50}$) of the natural graphite to the average diameter ($D_{50}$) of the artificial graphite may be greater than 1 to 3 or less, preferably 1.5 to 2.5, and more preferably 1.8 to 2.2, and when the ratio is in the above range, the packing between particles of the natural graphite particles and the artificial graphite particles is desirably achieved, and the improvement in the energy density and the prevention effect of the swelling may be desirably realized.

The natural graphite particles and the artificial graphite particles may be contained in the negative electrode material in a weight ratio of 35:65 to 95:5, preferably 45:55 to 92:8, more preferably 45:55 to 80:20, and still more preferably 48:52 to 60:40. When the weight ratio is in the above range, it is preferable because the capacity and energy density may be achieved at the desired level and the swelling prevention effect and the lifetime improvement effect may be maximized. In addition, when considering the difference in the average particle diameter of the natural graphite particles and the artificial graphite particles, the weight ratio thereof is adjusted to the above-mentioned level, and thus a degree of the packing between particles is excellent and the energy density of the negative electrode applied thereto may be highly maintained.

## <Negative Electrode>

In addition, the present invention provides a negative electrode including the above-described negative electrode material.

Specifically, the negative electrode of the present invention includes: a negative electrode current collector; and a negative electrode active material layer formed on the negative electrode current collector, and the negative electrode active material layer includes the above-described negative electrode material.

The negative electrode current collector generally has a thickness of 3 um to 500 um. The negative electrode current collector is not particularly limited so long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, an aluminum-cadmium alloy, or the like may be used.

The negative electrode active material layer includes the above-described negative electrode material.

The negative electrode active material layer may further include other active materials known in the art in addition to the above-described negative electrode material within the range that does not inhibit the effects of the present invention, specifically, one or two or more additional negative electrode active materials selected from the group consisting of: a carbonaceous material; lithium-containing titanium composite oxide (LTO); metals such as Si, Sn, Li, Zn, Mg, Cd, Ce, Ni, or Fe; alloys composed of the metals; oxides of the metals; and composites of the metals and carbon.

The negative electrode material may be contained in the negative electrode active material layer in an amount of 80 wt% to 99 wt%, preferably 80 wt% to 99 wt%.

In addition, the negative electrode active material layer may further include, together with the negative electrode material, optionally at least one additive selected from the group consisting of a binder, a thickener, and a conductive agent.

The binder is a component for assisting in bonding among a conductive agent, an active material, and a current collector, and is typically added in the negative electrode active material layer in an amount of 1 wt% to 30 wt%. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber, a fluoro rubber, various copolymers thereof, and the like.

All the thickeners, which are used in a conventional lithium secondary battery, may be used as the thickener, for example, CMC.

The conductive agent is a component for further improving the conductivity of the negative electrode material, and may be added in an amount of 1 wt% to 20 wt% in the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder, and nickel powder; conductive whiskers such as zinc oxide whiskers and potassium titanate whiskers; conductive metal oxide such as titanium oxide; or polyphenylene derivatives may be used. Specific examples of commercially available conductive agents include acetylene black series (products of Chevron Chemical Company, Denka Singapore Private limited, Gulf Oil Company, etc.), Ketjen black, EC-based series (products of Armak Company), Vulcan XC-72 (products of Cabot Company), Super P (products of Timcal Company), and the like.

## <Secondary battery>

In addition, the present invention provides a lithium secondary battery including the above-described negative electrode for a secondary battery.

Specifically, the lithium secondary battery includes: the above-described negative electrode; a positive electrode facing the negative electrode; a separator disposed between the negative electrode and the positive electrode; and an electrolyte.

The positive electrode may include a positive electrode current collector, and a positive electrode active material layer formed on the positive electrode current collector.

The positive electrode current collector is not particularly limited so long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used.

The positive electrode current collector may generally have a thickness of 3 um to 500 $\mu$m.

The positive electrode active material layer is formed on the positive electrode current collector, and includes a positive electrode active material.

The positive electrode active material is a compound capable of reversibly intercalating and deintercalating lithium, and the positive electrode active material may specifically include a lithium composite metal oxide including lithium and at least one metal such as cobalt, manganese, nickel, or aluminum. More specifically, the lithium composite metal oxide may include lithium-manganese-based oxide (e.g., $LiMnO_2$, $LiMn_2O_4$, etc.), lithium-cobalt-based oxide (e.g.,$LiCoO_2$, etc.), lithium-nickel-based oxide (e.g., $LiNiO_2$, etc.), lithium-nickel-manganese-based oxide (e.g., $LiNi_{1-Y}Mn_YO_2$ (where 0<Y<1), $LiMn_{2-z}Ni_zO_4$ (where 0<Z<2), etc.), lithium-nickel-cobalt-based oxide (e.g., $LiNi_{1-Y1}Co_{Y1}O_2$ (where 0<Y1<1), etc.), lithium-manganese-cobalt-based oxide (e.g., $LiCo_{1-Y2}Mn_{Y2}O_2$ (where 0<Y2<1) , $LiMn_{2-z1}Co_{z1}O_4$ (where 0<Z1<2), etc.), lithium-nickel-manganese-cobalt-based oxide (e.g., $Li(Ni_pCo_qMn_{r1})O_2$ (where 0<p<1, 0<q<1, 0<r1<1, and p+q+r1=1) or $Li(Ni_{p1}Co_{q1}Mn_{r2})O_4$ (where 0<p1<2, 0<q1<2, 0<r2<2, and p1+q1+r2=2), etc.), or lithium-nickel-cobalt-transition metal (M) oxide (e.g., $Li(Ni_{p2}Co_{q2}Mn_{r3}M_{S2})O_2$ (where M is selected from the group consisting of aluminum (Al), iron (Fe), vanadium (V), chromium (Cr), titanium (Ti), tantalum (Ta), magnesium (Mg), and molybdenum (Mo), and p2, q2, r3, and s2 are atomic fractions of each independent elements, wherein 0<p2<1, 0<q2<1, 0<r3<1, 0<S2<1, and p2+q2+r3+S2=1), etc.), and any one thereof or a mixture of two or more thereof may be included. Among these materials, in terms of the improvement of capacity characteristics and stability of the battery, the lithium composite metal oxide may include $LiCoO_2$, $LiMnO_2$, $LiNiO_2$, a lithium nickel manganese cobalt oxide (e.g., $Li(Ni_{0.6}Mn_{0.2}Co_{0.2})O_2$, $Li(Ni_{0.5}Mn_{0.3}Co_{0.2})O_2$, or $Li(Ni_{0.8}Mn_{0.1}Co_{0.1})O_2$, etc.), a lithium nickel cobalt aluminum oxide (e.g., $Li(Ni_{0.8}Co_{0.15}Al_{0.05})O_2$, etc.), or the like.

The positive electrode active material may be included in an amount of 80 wt% to 99 wt% based on a total weight of the positive electrode active material layer.

The positive electrode active material layer may further include, in addition to the above-described positive electrode active material, optionally at least one additive selected from the group consisting of a binder and a conductive agent.

The binder is a substance that assists in binding of the active material and the conductive material and binding to the current collector, and generally added in an amount of 1 wt% to 30 wt% based on the total weight of the positive electrode active material layer. Examples of the binder may include polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene terpolymer (EPDM), a sulfonated EPDM, a styrene-butadiene rubber, a fluoro rubber, various copolymers, and the like.

The conductive agent is not particularly limited as long as it has conductivity without causing adverse chemical changes in the battery, and, for example, a conductive material, such as: graphite; a carbon-based material such as carbon black, acetylene black, Ketjen black, channel black, furnace black, lamp black, and thermal black; conductive fibers such as carbon fibers or metal fibers; fluorocarbon; metal powder such as aluminum powder, and nickel powder; conductive whiskers such as zinc oxide whiskers and potassium titanate whiskers; conductive metal oxide such as titanium oxide; or polyphenylene derivatives, may be used. Specific examples of commercially available conductive agents include acetylene black series (products of Chevron Chemical Company, Denka Singapore Private limited, Gulf Oil Company, etc.), Ketjen black, EC-based series (products of Armak Company), Vulcan XC-72 (products of Cabot Company), Super P (products of Timcal Company), and the like.

The conductive agent may be included in an amount of 1 wt% to 30 wt% based on the total weight of the positive electrode active material layer.

The positive electrode active material layer may be manufactured by adding the positive electrode active material and an additive including optionally the binder and/or the conductive agent in a solvent to manufacture a positive electrode slurry, and then applying, rolling, and drying this on the positive electrode current collector.

The solvent may include an organic solvent, such as N-methyl-2-pyrrolidone (NMP), and may be used in an amount such that desirable viscosity is obtained when the positive electrode active material as well as selectively the binder and the conductive agent is included. For example, the solvent may be included in an amount such that a concentration of a solid content including the positive electrode active material as well as optionally the binder and the conductive agent is in a range of 50 wt% to 95 wt%, preferably, 70 wt% to 90 wt%.

In the lithium secondary battery, the separator separates the negative electrode and the positive electrode and provides a movement path of lithium ions. Any separator may be used as the separator without particular limitation as long as it is typically used in a lithium secondary battery, and particularly, a separator having high moisture-retention ability for an electrolyte as well as low resistance to the transfer of electrolyte ions is preferable. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used in order to secure heat resistance or mechanical strength, and may be optionally used in a single-layered or a multi-layered structure.

In addition, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the manufacture of the lithium secondary battery, but is not limited thereto.

Specifically, the electrolyte may include an organic solvent and a lithium salt.

Any organic solvent may be used as the organic solvent without particular limitation as long as it may serve as a medium through which ions involved in an electrochemical reaction of a battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charging and discharging performance of the battery, and a low-viscosity linear carbonate-based compound (e.g., ethylmethyl carbonate, dimethyl carbonate, or diethyl carbonate) is more preferable. In this case, the performance of the electrolyte may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, $LiB(C_2O_4)_2$, or the like may be used as the lithium salt. It is preferable to use the lithium salt in a concentration range of 0.1 M to 2.0 M. When the concentration of the lithium salt is in the above range, the electrolyte may have suitable conductivity and viscosity, thereby exhibiting excellent performance, and lithium ions may effectively move.

The secondary battery according to the present invention as described above may be useful for portable devices, such as mobile phones, notebook computers, and digital cameras, electric cars such as hybrid electric vehicles (HEVs), etc., and particularly, suitably used as a component battery of a medium and large sized battery module. Therefore, the present invention provides a medium and large sized battery module including the above secondary battery as a unit battery.

This medium and large sized battery module may be suitably applied to a power source requiring high power and large capacity, such as electric vehicles, hybrid electric vehicles, and power storage devices.

Hereinafter, examples of the present invention will be described in detail so that a person with ordinary skill in the art can easily carry out the present invention. The present invention may, however, be embodied in different forms and should not be construed as limited to the examples set forth herein.

## Examples and Comparative Examples

[Table 1]

| | Natural graphite particles | | | Artificial graphite particles | | | |
|---|---|---|---|---|---|---|---|
| | $D_{50}$ (μm) | BET specific surface area (m²/g) | wt% | Form | $D_{50}$ (μm) | BET specific surface area (m²/g) | wt% |
| Example 1 | 17 | 1.9 | 90 | Primary particles | 10 | 1.0 | 10 |

(continued)

| | Natural graphite particles | | | Artificial graphite particles | | | |
|---|---|---|---|---|---|---|---|
| | $D_{50}$ ($\mu$m) | BET specific surface area (m2/g) | wt% | Form | $D_{50}$ ($\mu$m) | BET specific surface area (m2/g) | wt% |
| Example 2 | 17 | 1.9 | 70 | Primary particles | 8 | 1.2 | 30 |
| Example 3 | 17 | 1.9 | 50 | Primary particles | 8 | 1.2 | 50 |
| Comparative example 1 | 17 | 2.7 | 70 | Primary particles | 10 | 1.3 | 30 |
| Comparative example 2 | 17 | 2.7 | 70 | Primary particles | 17 | 1.5 | 30 |
| Comparative example 3 | 17 | 1.9 | 70 | Primary particles | 17 | 1.5 | 30 |
| Comparative example 4 | 17 | 1.9 | 50 | Primary particles | 17 | 1.5 | 50 |
| Comparative example 5 | 17 | 1.9 | 50 | Primary particles | 8 | 3.0 | 50 |
| Comparative example 6 | 17 | 1.9 | 100 | - | - | - | - |

**Example 1: Manufacture of Negative Electrode Material**

<Manufacture of Natural Graphite Particles>

Spherical natural graphite raw materials were subjected to a cold isostatic press (CIP) (applied pressure: 90 MPa, applied time: 100 seconds), pulverized, and then the pulverized particles (natural graphite core) and pitch were mixed in a weight ratio of 97.1:2.9, the resulting mixture was heat-treated at 1,250 °C for 24 hours to form an amorphous carbon coating layer on the pulverized particles, and deiorning and sieving were performed to manufacture natural graphite particles of Example 1.
The average particle diameter ($D_{50}$) of the natural graphite particles was 17 um, and the BET specific surface area was 1.9 m2/g.

<Manufacture of Artificial Graphite Particles>

Needle coke raw materials were pulverized and subjected to air classification, and shaped to manufacture particles in a primary particle form, and then the particles were heat-treated at 3,000 °C and graphitized to manufacture artificial graphite particles of Example 1.
The average particle diameter ($D_{50}$) of the artificial graphite particles was 10 um and in a primary particle form (the form in which primary particles are not aggregated), and the BET specific surface area was 1.0 m2/g.

<Manufacture of Negative Electrode Material>

The natural graphite particles and the artificial graphite particles as manufactured above were mixed in a weight ratio of 90:10 to manufacture a negative electrode material of Example 1.

**Example 2: Manufacture of Negative Electrode Material**

<Manufacture of Natural Graphite Particles>

The natural graphite particles manufactured in Example 1 were prepared.

<Manufacture of Artificial Graphite Particles>

The conditions of pulverizing, air classification, and shaping processes in Example 1 were adjusted to manufacture artificial graphite particles according to Example 2, the artificial graphite particles having an average particle diameter ($D_{50}$) of 8 $\mu$m, being in a primary particle form, and having a BET specific surface area of 1.2 m$^2$/g.

<Manufacture of Negative Electrode Material>

The natural graphite particles and the artificial graphite particles as manufactured above were mixed in a weight ratio of 70:30 to manufacture a negative electrode material of Example 2.

**Example 3: Manufacture of Negative Electrode Material**

A negative electrode material of Example 3 was manufactured in the same manner as in Example 2 except that the natural graphite particles and the artificial graphite particles used in Example 2 were used in a weight ratio of 50:50.

**Comparative Example 1: Manufacture of Negative Electrode Material**

<Manufacture of Natural Graphite Particles>

Natural graphite particles according to Comparative Example 1 were manufactured in the same manner as in Example 1 except that the CIP process was not performed, and the heat-treatment temperature was adjusted to 1,200 °C when forming an amorphous carbon coating layer. The average particle diameter ($D_{50}$) of the natural graphite particles was 17 um, and the BET specific surface area was 2.7 m$^2$/g.

<Manufacture of Artificial Graphite Particles>

Artificial graphite particles of Comparative Example 1 were manufactured in the same manner as in Example 1 except that graphitizing treatment was performed at a heat-treating temperature of 2,800 °C. The average particle diameter ($D_{50}$) of the artificial graphite particles was 10 um, in a primary particle form, and the BET specific surface area was 1.3 m$^2$/g.

<Manufacture of Negative Electrode Material>

The natural graphite particles and the artificial graphite particles as manufactured above were mixed in a weight ratio of 70:30 to manufacture a negative electrode material of Comparative Example 1.

**Comparative Example 2: Manufacture of Negative Electrode Material**

<Manufacture of Natural Graphite Particles>

The natural graphite particles manufactured in Comparative Example 1 were prepared.

<Manufacture of Artificial Graphite Particles>

The conditions of pulverizing, air classification, and shaping of needle coke raw materials in Comparative Example 1 were adjusted to manufacture artificial graphite particles of Comparative Example 2, the artificial graphite particles having an average particle diameter ($D_{50}$) of 17 $\mu$m, being in a primary particle form, and having a BET specific surface area of 1.5 m$^2$/g.

<Manufacture of Negative Electrode Material>

The natural graphite particles and the artificial graphite particles as manufactured above were mixed in a weight ratio of 70:30 to manufacture a negative electrode material of Comparative Example 2.

**Comparative Example 3: Manufacture of Negative Electrode Material**

<Manufacture of Natural Graphite Particles>

The natural graphite particles manufactured in Example 1 were prepared.

<Manufacture of Artificial Graphite Particles>

The artificial graphite particles used in Comparative Example 2 were prepared.

<Manufacture of Negative Electrode Material>

The natural graphite particles and the artificial graphite particles as manufactured above were mixed in a weight ratio of 70:30 to manufacture a negative electrode material of Comparative Example 3.

**Comparative Example 4: Manufacture of Negative Electrode Material**

A negative electrode material of Comparative Example 4 was manufactured in the same manner as in Comparative Example 3 except that the natural graphite particles and the artificial graphite particles used in Comparative Example 3 were used in a weight ratio of 50:50.

**Comparative Example 5: Manufacture of Negative Electrode Material**

<Manufacture of Natural Graphite Particles>

The natural graphite particles manufactured in Example 1 were prepared.

<Manufacture of Artificial Graphite Particles>

The conditions of pulverizing, air classification, and shaping of needle coke raw materials in Comparative Example 1 were adjusted, and the heat-treating temperature during the graphitization was adjusted to 2,700 °C to manufacture artificial graphite particles according to Comparative Example 5, the artificial graphite particles having an average particle diameter ($D_{50}$) of 8 $\mu$m, being in a primary particle form, and having a BET specific surface area of 3.0 $m^2$/g.

<Manufacture of Negative Electrode Material>

The natural graphite particles and the artificial graphite particles as manufactured above were mixed in a weight ratio of 50:50 to manufacture a negative electrode material of Comparative Example 5.

**Comparative Example 6: Manufacture of Negative Electrode Material**

Only the natural graphite particles used in Example 1 were prepared as a negative electrode material.

**Experimental Example 1: Swelling Evaluation**

**<Manufacture of Lithium Secondary Battery>**

Each negative electrode material manufactured in Examples 1-3 and Comparative Examples 1-6, Super C65 as a conductive agent, a styrene-butadiene rubber as a binder, and carboxymethyl cellulose (CMC) as a thickener were mixed in a weight ratio of 96.6:1.0:1.3:1.1, and water was added thereto to manufacture a negative electrode slurry. Then, the negative electrode slurry was applied on a copper foil, and dried under vacuum at about 130 °C for 8 hours and rolled to manufacture a negative electrode having an area of 1.4875 $cm^2$, which was used as each negative electrode of Examples 1-3 and Comparative Examples 1-6. In this case, the negative electrode was manufactured so that the loading of the negative electrode was about 3.4 mAh/$cm^2$.

LiCoO$_2$ as a positive electrode active material, Li-435 (manufactured by Denka Co., Ltd.) as a conductive agent, KF9700 (manufactured by Kureha Co.) as a binder, and BH-730H (manufactured by Zeon Co.) as a thickener were mixed in a weight ratio of 97.68:1.20:1.00:0.12, and N-methylpyrrolidone (NMP) was added thereto to manufacture a positive electrode slurry. The positive electrode slurry was applied on an aluminum foil, and dried under vacuum at about 130 °C for 8 hours and rolled to manufacture a positive electrode having an area of 1.7671 cm$^2$. In this case, the positive electrode was manufactured so that the loading of the positive electrode was about 3.4 mAh/cm$^2$.

A polyolefin separator was interposed between each negative electrode manufactured in Examples 1-3 and Comparative Examples 1-6 and the positive electrode, and then an electrolyte was injected thereinto to manufacture each secondary battery of Examples and Comparative Examples. As th e electrolyte, an electrolyte obtained as follows was used: to a non-aqueous electrolyte solvent in which ethylene carbonate (EC) and ethylmethyl carbonate (EMC) were mixed in a volume ratio of 2:8, vinylene carbonate (VC) was added in an amount of 0.5 wt% with respect to the solvent, and $LiPF_6$ was dissolved therein to be 1 M.

**<Swelling Evaluation>**

The lithium secondary battery of Examples 1-3 and Comparison Examples 1-6 as manufactured above was charged and discharged in a charging range of SOC 0 to SOC 95, in which a first cycle is 0.1 C, a second cycle is 0.2 C, and a third cycle to a 30th cycle are 0.5 C. Thereafter, a swelling ratio was measured and calculated by Equation 1 below. The results thereof are shown in Table 2 below.

$$[\text{Equation 1}]$$

$$\text{Swelling ratio (\%)} = \{(t_2-t_1)/t_1\}\times 100$$

(where $t_1$ is the thickness of the negative electrode for the secondary battery before performing the first cycle of charging and discharging, and $t_2$ is the thickness of the negative electrode for the secondary battery after performing the 30th cycle of charging and discharging)

**Experimental Example 2: Initial Discharge Capacity Measurement of Negative Electrode Material**

<Manufacture of Coin-type Half Cell Secondary Battery>

Each negative electrode material manufactured in Examples 1-3 and Comparative Examples 1-6, Super C65 as a conductive agent, a styrene-butadiene rubber as a binder, and carboxymethyl cellulose (CMC) as a thickener were mixed in a weight ratio of 96.6:1.0:1.3:1.1, and water was added thereto to manufacture a negative electrode slurry. Then, the negative electrode slurry was applied on a copper foil, and dried under vacuum at about 130 °C for 8 hours and rolled, which was used as each negative electrode of Examples 1-3 and Comparative Examples 1-6.

A lithium metal counter electrode was used as the positive electrode.

A polyolefin separator was interposed between each negative electrode manufactured in Examples 1-3 and Comparative Examples 1-6 and the positive electrode, and then an electrolyte was injected thereto to manufacture each coin-type half cell secondary battery of Examples and Comparative Examples. As the electrolyte, an electrolyte obtained as follo ws was used: to a non-aqueous electrolyte solvent in which ethylene carbonate (EC) and ethylmethyl carbonate (EMC) were mixed in a volume ratio of 2:8, vinylene carbonate (VC) was added in an amount of 0.5 wt% with respect to the solvent, and $LiPF_6$ was dissolved therein to be 1M.

<Initial Discharge Capacity Measurement>

The coin-type half cell secondary battery was charged and discharged under the following charging and discharging conditions, the initial discharge capacity was measured, and the results thereof are shown in Table 2 below:

Charging condition: CCCV mode, 0.1 C charging, cut-off at 0.005 C and 5 mV

Discharging condition: CC mode, 0.1 C discharging, cut-off at 1.5 V

[Table 2]

|  | Swelling ratio (%) | Initial discharge capacity (Unit: mAh/g) |
|---|---|---|
| Example 1 | 22 | 364 |
| Example 2 | 21 | 361 |
| Example 3 | 20 | 359 |

(continued)

|  | Swelling ratio (%) | Initial discharge capacity (Unit: mAh/g) |
| --- | --- | --- |
| Comparative example 1 | 28 | 360 |
| Comparative example 2 | 29 | 361 |
| Comparative example 3 | 25 | 362 |
| Comparative example 4 | 24 | 360 |
| Comparative example 5 | 23 | 359 |
| Comparative example 6 | 24 | 365 |

Referring to Table 2, it may be confirmed that for the negative electrodes and secondary batteries using the negative electrode materials of Examples 1-3 that satisfy the BET specific surface area, the relationship of the average particle diameter, and the weight ratio of the natural graphite and artificial graphite according to the present invention, the swelling is prevented at a significantly excellent level and the initial discharge capacity is exhibited at a high level compared to those of Comparative Examples 1-6.

**Claims**

1.  A negative electrode material, comprising:

    natural graphite particles having a BET specific surface area ranging from 1.0 $m^2$/g to 2.4 $m^2$/g; and
    artificial graphite particles having a BET specific surface area ranging from 0.5 $m^2$/g to 2.0 $m^2$/g,
    wherein an average particle diameter ($D_{50}$) of the natural graphite particles is larger than an average particle diameter ($D_{50}$) of the artificial graphite particles.

2.  The negative electrode material of claim 1, wherein the natural graphite particles have an average particle diameter ($D_{50}$) of 14 um to 21 $\mu$m.

3.  The negative electrode material of claim 1, wherein the natural graphite particles comprise a natural graphite core and a carbon coating layer formed on the natural graphite core.

4.  The negative electrode material of claim 3, wherein the natural graphite particles comprise 1 wt% to 7 wt% of the carbon coating layer.

5.  The negative electrode material of claim 1, wherein the artificial graphite particles have an average particle diameter ($D_{50}$) of 6 um to 13 $\mu$m.

6.  The negative electrode material of claim 1, wherein the artificial graphite is in a form of a primary particle.

7.  The negative electrode material of claim 1, wherein a ratio of the average particle diameter ($D_{50}$) of the natural graphite to the average particle diameter ($D_{50}$) of the artificial graphite is greater than 1 to 3 or less.

8.  The negative electrode material of claim 1, wherein the natural graphite particles and the artificial graphite particles are included in a weight ratio of 35:65 to 95:5.

9.  A negative electrode, comprising:

    a negative electrode current collector; and
    a negative electrode active material layer formed on the negative electrode current collector,
    wherein the negative electrode active material layer comprises the negative electrode material according to claim 1.

10. A secondary battery, comprising:

the negative electrode according to claim 9;
a positive electrode facing the negative electrode;
a separator interposed between the negative electrode and the positive electrode; and
an electrolyte.

## INTERNATIONAL SEARCH REPORT

| International application No. |
| --- |
| **PCT/KR2021/012366** |

### A. CLASSIFICATION OF SUBJECT MATTER

**H01M 4/36**(2006.01)i; **H01M 4/587**(2010.01)i; **H01M 4/62**(2006.01)i; **H01M 4/133**(2010.01)i; **H01M 10/0525**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/36(2006.01); H01M 10/0525(2010.01); H01M 4/02(2006.01); H01M 4/13(2010.01); H01M 4/133(2010.01); H01M 4/58(2010.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 천연흑연(natural graphite), 인조흑연(artificial graphite), BET 비표면적(BET surface area), 평균 입경(average particle diameter), 음극재(negative electrode material), 이차전지(secondary battery)

### C. DOCUMENTS CONSIDERED TO BE RELEVANT

| Category* | Citation of document, with indication, where appropriate, of the relevant passages | Relevant to claim No. |
| --- | --- | --- |
| X | KR 10-2015-0027167 A (SHOWA DENKO K.K.) 11 March 2015 (2015-03-11)<br>See claims 1, 3, 8 and 9; and paragraphs [0025], [0054]-[0055], [0081] and [0121]-[0124]. | 1-10 |
| X | US 2017-0179487 A1 (NEC ENERGY DEVICES, LTD.) 22 June 2017 (2017-06-22)<br>See claims 1, 11, 13 and 16; and paragraphs [0039] and [0062]. | 1-10 |
| A | KR 10-2018-0035693 A (LG CHEM, LTD.) 06 April 2018 (2018-04-06)<br>See claims 1, 8, 12, 13 and 16; and paragraphs [0055] and [0057]. | 1-10 |
| A | KR 10-2014-0121445 A (JFE STEEL CORPORATION) 15 October 2014 (2014-10-15)<br>See claims 1-9. | 1-10 |
| A | JP 2020-053282 A (SEKISUI CHEM. CO., LTD.) 02 April 2020 (2020-04-02)<br>See claims 1-5. | 1-10 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **17 December 2021** | **17 December 2021** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2021/012366**

**C.    DOCUMENTS CONSIDERED TO BE RELEVANT**

| Category* | Citation of document, with indication, where appropriate, of the relevant passages | Relevant to claim No. |
|---|---|---|
| A | JP 09-027314 A (MATSUSHITA ELECTRIC IND. CO., LTD.) 28 January 1997 (1997-01-28)<br>See claims 1-4. | 1-10 |

Form PCT/ISA/210 (second sheet) (July 2019)

**INTERNATIONAL SEARCH REPORT**
Information on patent family members

International application No.

**PCT/KR2021/012366**

| Patent document cited in search report | | | Publication date (day/month/year) | Patent family member(s) | | | Publication date (day/month/year) |
|---|---|---|---|---|---|---|---|
| KR | 10-2015-0027167 | A | 11 March 2015 | CN | 104521038 | A | 15 April 2015 |
| | | | | CN | 104521038 | B | 22 August 2017 |
| | | | | JP | 6154380 | B2 | 28 June 2017 |
| | | | | KR | 10-1887952 | B1 | 13 August 2018 |
| | | | | WO | 2014-024473 | A1 | 13 February 2014 |
| US | 2017-0179487 | A1 | 22 June 2017 | CN | 106463727 | A | 22 February 2017 |
| | | | | CN | 106463727 | B | 15 March 2019 |
| | | | | CN | 110137442 | A | 16 August 2019 |
| | | | | EP | 3128586 | A1 | 08 February 2017 |
| | | | | EP | 3128586 | B1 | 23 January 2019 |
| | | | | JP | 6545663 | B2 | 17 July 2019 |
| | | | | US | 10749179 | B2 | 18 August 2020 |
| | | | | WO | 2015-152113 | A1 | 08 October 2015 |
| KR | 10-2018-0035693 | A | 06 April 2018 | CN | 108701816 | A | 23 October 2018 |
| | | | | EP | 3396745 | A2 | 31 October 2018 |
| | | | | KR | 10-1966144 | B1 | 05 April 2019 |
| | | | | US | 2019-0305308 | A1 | 03 October 2019 |
| KR | 10-2014-0121445 | A | 15 October 2014 | CN | 104145358 | A | 12 November 2014 |
| | | | | CN | 104145358 | B | 08 March 2017 |
| | | | | JP | 2013-211254 | A | 10 October 2013 |
| | | | | JP | 6040022 | B2 | 07 December 2016 |
| | | | | KR | 10-1633206 | B1 | 23 June 2016 |
| | | | | TW | 201345031 | A | 01 November 2013 |
| | | | | TW | I470865 | B | 21 January 2015 |
| | | | | WO | 2013-128829 | A1 | 06 September 2013 |
| JP | 2020-053282 | A | 02 April 2020 | | None | | |
| JP | 09-027314 | A | 28 January 1997 | JP | 3440638 | B2 | 25 August 2003 |

Form PCT/ISA/210 (patent family annex) (July 2019)

**EP 4 174 986 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200117152

- JP 4403327 B